# EUROPÄISCHE PATENTSCHRIFT

(11) **EP 2 223 077 B1**
(45) Veröffentlichungstag und Bekanntmachung des Hinweises auf die Patenterteilung: **14.09.2011**
(21) Anmeldenummer: 08802863.4
(22) Anmeldetag: 11.10.2008
(51) Int. Cl.: G01N 5/04

(54) **VORRICHTUNG UND VERFAHREN ZUR THERMOGRAVIMETRISCHEN MATERIALFEUCHTEBESTIMMUNG**
DEVICE AND METHOD FOR DETERMINING MATERIAL MOISTURE BY THERMOGRAVIMETRY
DISPOSITIF ET PROCÉDÉ POUR DÉTERMINER L'HUMIDITÉ D'UN MATÉRIAU PAR THERMOGRAVIMÉTRIE

(30) Priorität: 03.12.2007 DE 102007058390
(43) Veröffentlichungstag der Anmeldung: 01.09.2010
(73) Patentinhaber: Sartorius Weighing Technology GmbH, 37075 Göttingen (DE)
(72) Erfinder: SPANNAGEL, Wilfried, 37081 Göttingen (DE); HOLLSTEIN, Sven, 30159 Hannover (DE)
(86) Internationale Anmeldenummer: PCT/EP2008/008604
(87) Internationale Veröffentlichungsnummer: WO 2009/071143

(56) Entgegenhaltungen:
- EP-A- 1 318 699
- WO-A-00/14552
- WO-A-00/16067
- WO-A-99/61878
- WO-A-2006/048080
- GB-A- 2 202 054

## Beschreibung

Die Erfindung betrifft eine Vorrichtung zur thermogravimetrischen Materialfeuchtebestimmung mit einer Prüfkammer, die nach oben von einer Kammerdecke begrenzt wird, einem von einem Magnetron erzeugbaren über einen Wellenleiter einer Prüfkammer zuführbaren Mikrowellenfeld, einem in der Prüfkammer angeordneten Tuningstab, einem Probenträger, der mit einem der Prüfkammer vorgelagerten Wägemodul in Wirkverbindung steht, und mindestens einem in der Prüfkammer angeordneten Sensor.

Hauptsächlich für Anwendungen in der Lebensmittel- und Getränkeindustrie sowie in der chemischen und pharmazeutischen Industrie, aber auch in der Kosmetik-, Futtermittel- und Baustoffindustrie werden im Betriebslabor Vorrichtungen und Verfahren zur thermogravimetrischen Materialfeuchtebestimmung eingesetzt.

Aus der US 6 247 246 B1 ist eine Vorrichtung zur thermogravimetrischen Materialfeuchtebestimmung bekannt, die eine zylindrische Prüfkammer mit einem mit einem Wägemodul in Wirkverbindung stehenden Probenträger aufweist, auf den die zu messende Probe aufgebracht wird. Der Prüfkammer ist über einen Wellenleiter ein von einem Magnetron erzeugtes Mikrowellenfeld zur Trocknung der Probe zuführbar. Die der Probe entzogene Feuchtigkeit lässt sich über Öffnungen in der Kammerdecke, die in mindestens einem Abluftkanal enden, von Ventilatoren absaugen. Die bekannte Vorrichtung weist in der Kammerdecke mindestens einen Mikrowellensensor auf. Zudem können in der Kammerdecke ein Gas- bzw. Rauchsensor und ein Sensor zur Erkennung von Licht- bzw. Lichtblitzen angeordnet sein. Um das Mikrowellenfeldeffektiv auf die Probe einwirken zu lassen sind seitlich der Probe am Prüfkammerboden, benachbart zu zwei Portalen zur Zuführung der Mikrowellen in die Prüfkammer, zwei Tuningstäbe angeordnet.

Nachteilig bei der bekannten Vorrichtung, die sich grundsätzlich bewährt hat, ist, dass es noch relativ schwierig ist, das Ende des Trocknungsvorganges schnell zu erkennen, um die Probe erneut zu wiegen. Dadurch müssen unerwünschte Zeitverluste in Kauf genommen werden. Die in der US 6 247 246 B1 vorgeschlagene Verwendung mehrerer Mikrowellensensoren führt praktisch nicht zu einer Verkürzung des Messvorganges.

Aufgabe der vorliegenden Erfindung ist es daher, die bekannte Vorrichtung so zu verbessern, dass die thermogravimetrischen Materialfeuchtebestimmung noch schneller durchgeführt werden kann.

Diese Aufgabe wird in Verbindung mit dem Oberbegriff des Anspruches 1 dadurch gelöst, dass der Tuningstab an der Kammerdecke mittig oberhalb des Probenträgers angeordnet ist und dass an dem der Kammerdecke abgewandten freien Ende des Tuningstabs mindestens ein Sensor angeordnet ist.

Überraschenderweise führt der mittig oberhalb der Probe angeordnete Tuningstab zu einem ähnlich guten Mikrowellenfeld wie die bekannten seitlich der Probe am Prüfkammerboden als spezielle Mittel zur Beeinflussung des Mikrowellenfeldes angeordneten zwei Tuningstäbe. Darüber hinaus führt der dicht oberhalb der Probe am Tuningstab angeordnete Sensor zu einem schnelleren Ergebnis.

Durch die effektive Messung dicht an der Probe wird zudem eine eventuelle Überlastung durch Überhitzung der Probe schneller erkannt, so dass die Vorrichtung insgesamt sicherer ist.

Gemäß einer bevorzugten Ausführungsform der Erfindung ist der am Tuningstab angeordnete Sensor als ein Mikrowellensensor oder als ein berührungslos messender Temperatursensor, zum Beispiel ein Infrarotsensor, ausgebildet ist. In der Prüfkammer ist dabei ein zweiter Sensor angeordnet, der als ein berührungslos messender Temperatursensor (wenn der Sensor am Tuningstab als Mikrowellensensor ausgebildet ist) oder als ein Mikrowellensensor (wenn der Sensor am Tuningstab als ein Temperatursensor ausgebildet ist) ausgebildet ist.

Nach einer anderen Ausführungsform der Erfindung ist zusätzlich zu einem oder mehreren Sensoren in der Prüfkammer im Abluftstrom ein Luftfeuchtesensor angeordnet.

Durch die Anordnung unterschiedlicher Sensoren, die den eigentlichen Messvorgang unterstützen, wird die gleichzeitige Messung bzw. Überwachung der Feuchte indirekt über die Änderung des Mikrowellenfeldes in der Prüfkammer durch den Mikrowellensensor und die Messung der Luftfeuchte im Abluftstrom durch den Luftfeuchtesensor möglich. Dadurch kann das Ende des Trocknungsvorganges schneller erkannt und die Feuchte der Probe schneller und sicherer ermittelt werden.

Gemäß einer weiteren bevorzugten Ausführungsform der Erfindung ist am Magnetron ein'Temperaturfühler vorgesehen

Durch den Temperatursensor kann eine mögliche Überlastung des Magnetrons früh erkannt und dieser beispielsweise durch eine Leistungsverminderung des Mikrowellenfeldes und/oder durch Zuschaltung weiterer Lüfter bzw. Steigerung der Lüfterleistung entgegengewirkt werden

Nach einer bevorzugten Ausführungsform der Erfindung ist der Wellenleiter fixiert, wobei der Probenträger um eine vertikale Drehachse über die er mit dem Wägemodul in Verbindung steht, drehbar ist. In der Kammerdecke sind Abluftöffnungen vorgesehen, über die ein von mindestens einem Ventilator erzeugter Abluftstrom aus der Prüfkammer nach Außen ableitbar ist.

Aus der US 6 247 246 B1 ist weiterhin ein Verfahren zur thermogravimetrischen Materialfeuchteschnellbestimmung bekannt. Bei dem bekannten Verfahren wird der Feuchteverlust bei der Trocknung einer Probe bestimmt. Dabei wird die Probe zum Trocknen in einer zylindrischen Prüfkammer auf einem Probenträger angeordnet und ihr Gewicht bestimmt. In der Prüfkammer wird ein Mikrowellenfeld erzeugt und die Änderung der Mikrowellenenergie, die mit dem Flüssigkeitsverlust der Probe korreliert, wird von einem Mikrowellensensor überwacht. Nach Ende des Trocknungsprozesses wird das Gewicht erneut bestimmt.

Nachteilig bei dem bekannten Verfahren, das sich grundsätzlich bewährt hat, ist, dass es noch relativ schwierig ist, das Ende des Trocknungsvorganges zu erkennen, um die Probe erneut zu wiegen. Dadurch müssen unerwünschte Zeitverluste in Kauf genommen werden und es kann zu einer Überlastung der Probe oder einzelner Komponenten der Vorrichtung kommen. Es hat sich gezeigt, dass die in der US 6 247 246 B1 vorgeschlagene Verwendung mehrerer Mikrowellensensoren nicht zielführend ist.

Durch die Erfindung ist es möglich, dass in der Prüfkammer das Mikrowellenfeld durch einen Mikrowellensensor und/oder die von dem Mikrowellenfeld erzeugte Temperatur durch einen berührungslosen Temperatursensor und gleichzeitig der Abluftstrom aus der Prüfkammer durch einen Luftfeuchtesensor überwacht und die ermittelten Überwachungswerte zur Steuerung der Materialfeuchtebestimmung genutzt werden.

Durch die gleichzeitige Messung bzw. Überwachung der Feuchte indirekt über die Änderung des Mikrowellenfeldes in der Prüfkammer und die Messung der Luftfeuchte im Abluftstrom kann das Ende des Trocknungsvorganges schneller erkannt und die Feuchte der Probe schneller und sicherer ermittelt werden.

Gemäß einer bevorzugten Ausführungsform der Erfindung wird zusätzlich am Magnetron durch einen Temperatursensor die Temperatur überwacht und der ermittelte Überwachungswert zur Steuerung der Materialfeuchtebestimmung genutzt.

Dabei kann durch den Temperatursensor eine mögliche Überlastung des Magnetrons früh erkannt und dieser beispielsweise durch eine Leistungsverminderung des Mikrowellenfeldes und/oder durch Zuschaltung weiterer Lüfter bzw. Steigerung der Lüfterleistung entgegengewirkt werden. Die Leistung der Lüfter lässt sich zudem auch über eigene den Lüftern zugeordnete Sensoren steuern.

Die Heizleistung des Mikrowellenfeldes kann von mindestens einem der Sensoren gesteuert werden. Insbesondere bei Einsatz der Invertertechnik lässt sich die Leistung des Mikrowellenfeldes und damit die Heizleistung über die von den Sensoren ermittelten Werte steuern. Auch lassen sich die Einstellungen von elektronischen Filtern, eine Messendeerkennung und eine Messendwertprognose von mindestens einem der Sensoren steuern.

Weitere Einzelheiten der Erfindung ergeben sich aus der nachfolgenden ausführlichen Beschreibung und den beigefügten Zeichnungen, in denen bevorzugte Ausführungsformen der Erfindung beispielhaft veranschaulicht sind.

In den Zeichnungen zeigen:

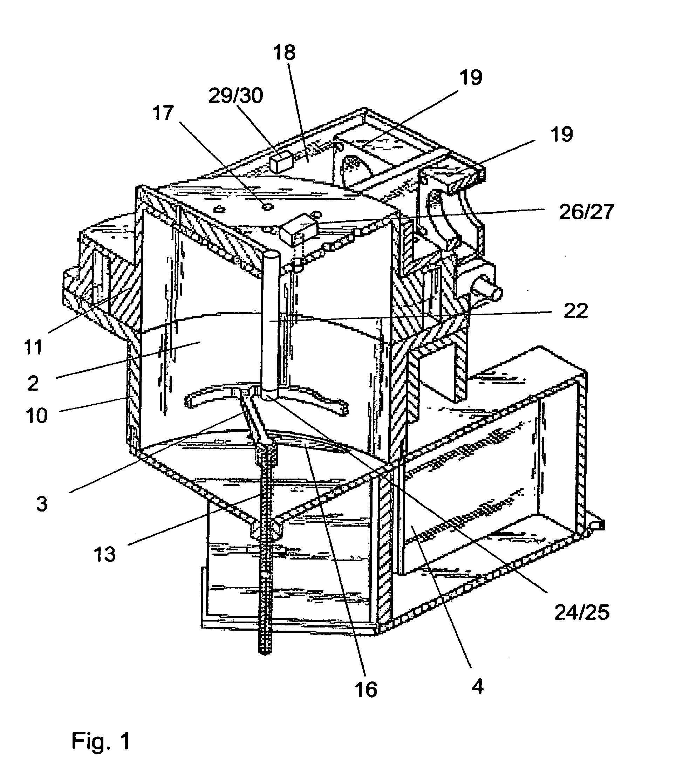

- Figur 1:: eine räumliche Seitenansicht einer Prüfkammer ohne Abdeckhaube mit Wellenleiter im Schnitt und Ausriss,

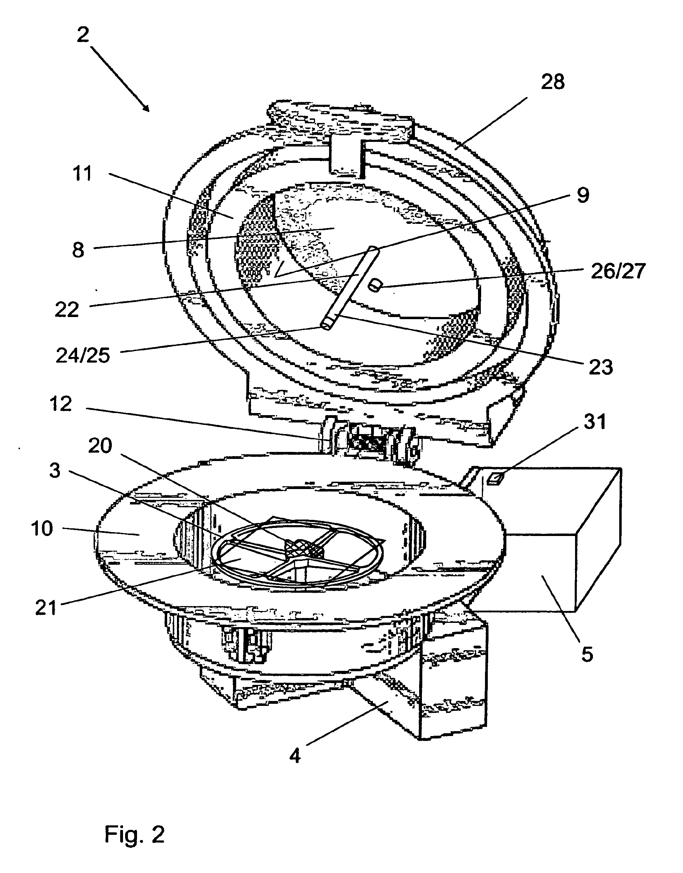

- Figur 2:: eine räumliche Vorderansicht einer geöffneten Prüfkammer mit Abdeckhaube, Wellenleiter und Magnetron,

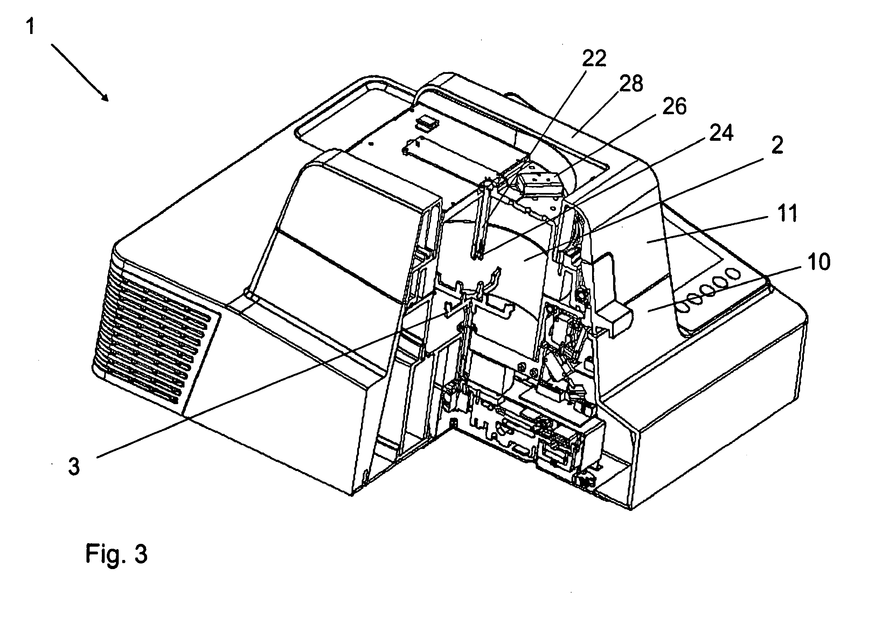

- Figur 3:: eine räumliche Vorderansicht, teilweise geschnitten, mit nach oben geöffneter Abdeckung einer weiteren Vorrichtung zur thermogravimetrischen Materialfeuchtebestimmung und

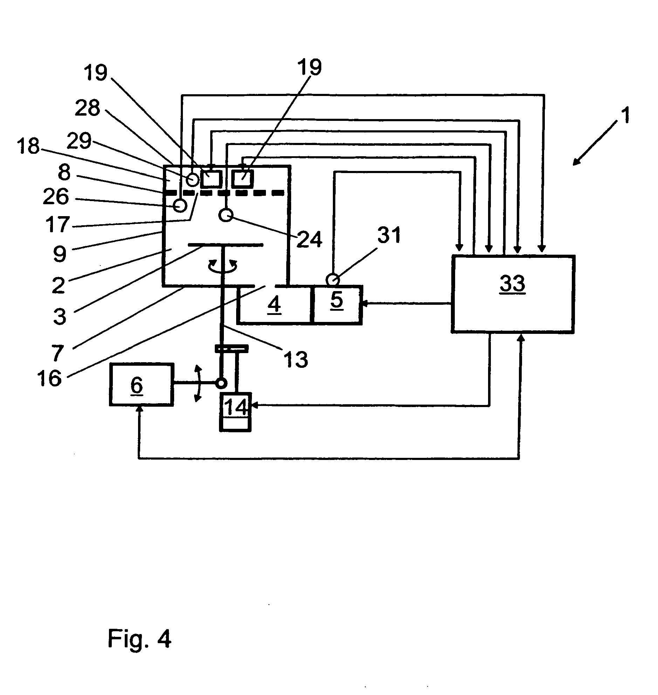

- Figur 4:: ein Blockschaltbild der Vorrichtung von Fig. 3.

Eine Vorrichtung 1 zur thermogravimetrischen Materialfeuchtebestimmung besteht im Wesentlichen aus einer Prüfkammer 2 mit einem Probenträger 3, einem Wellenleiter 4, einem Magnetron 5 und einem Wägemodul 6.

Die Prüfkammer 2 wird in vertikaler Richtung unten durch einen Kammerboden 7 und in vertikaler Richtung nach oben durch eine Kammerdecke 8 begrenzt. Seitlich wird die Prüfkammer 2 durch eine zylindrische Wandung 9 begrenzt. Die Prüfkammer 2 ist in vertikaler Richtung in ein Unterteil 10 und ein Oberteil 11 getrennt, wobei das Oberteil 11 zum Bestücken der Prüfkammer 2 über ein Scharnier 12 nach oben wegklappbar ist.

In dem Unterteil 10 ist der Probenträger 3 angeordnet, der über eine vertikale Drehachse 13, die durch den Kammerboden 7 geführt wird, mit dem Wägemodul 6 in Wirkverbindung steht. Über die Drehachse 13 ist der Probenträger 3 von einem Elektromotor 14 drehbar. Der Kammerboden 7 ist mit dem Wellenleiter 4, der Y-förmig ausgebildet ist, verbunden. Über den Wellenleiter 4 werden die von dem Magnetron 5 erzeugten Mikrowellen über in dem Kammerboden angeordnete Portale 16 der Prüfkammer 2 zugeführt. In der Prüfkammer 2 bilden die Mikrowellen ein Mikrowellenfeld, das eine auf dem Probenträger 3 angeordnete Probe 20 bzw. das zu untersuchende Material erwärmt, so dass die in der Probe 20 vorhandene Feuchte infolge eines Trocknungsprozesses austritt. In der Kammerdecke 8 sind Öffnungen 17 ausgebildet, die in einem oder mehreren Abluftkanälen 18 münden, über den die der Probe 20 entwichene Feuchte von Ventilatoren 19 abgesaugt wird. Um das Mikrowellenfeld zur Probe 20 hin, die beispielsweise auf einer auf dem Probenträger 3 gelagerten Glassscheibe 21 oder einem Träger aus einem anderen mikrowellenbeständigen Material angeordnet ist, zu konzentrieren, ist an der Kammerdecke 8 ein Tuningstab 22 angeordnet, das mit seinem der Kammerdecke 8 abgewandten freien Ende 23 mittig oberhalb des Probenträgers 3 bzw. der Probe 20 angeordnet ist. An dem freien Ende 23 ist ein Sensor 24 angeordnet, der beispielsweise als ein berührungsloser Temperatursensor 25, im Beispiel ein Infrarotsensor ausgebildet ist. In der Prüfkammer 2 ist an der Kammerdecke 8 ein zweiter Sensor 26 angeordnet, der beispielsweise als ein Mikrowellensensor 27 ausgebildet ist.

Im Abluftkanal 18, der zwischen der Kammerdecke 8 und einer Abdeckung 28 gebildet wird, ist ein weiterer Sensor 29 angeordnet, der beispielsweise als ein Luftfeuchtesensor 30 ausgebildet ist. Weiterhin ist am Magnetron 5 ein weiterer Sensor 31 angeordnet, der als ein Temperatursensor 32 ausgebildet ist.

Die von den Sensoren 24, 26, 29, 31 ermittelten Überwachungswerte werden einer Rechen- und Steuereinheit 33 zugeführt, die als ein Mikroprozessor ausgebildet ist der den gesamten Messvorgang überwacht, steuert und die Proben- bzw. Materialfeuchte berechnet.

### Bezugszeichenliste

- 1: Vorr. zur thermogravimetrischen Materialfeuchtebestimmung
- 2: Prüfkammer
- 3: Probenträger
- 4: Wellenleiter
- 5: Magnetron
- 6: Wägemodul
- 7: Kammerboden
- 8: Kammerdecke
- 9: zylindrische Wandung
- 10: Unterteil
- 11: Oberteil
- 12: Scharnier
- 13: Drehachse
- 14: Elektromotor
- 16: Portal
- 17: Öffnung
- 18: Abluftkanal
- 19: Ventilator
- 20: Probe
- 21: Glasscheibe
- 22: Tuningstab
- 23: freies Ende von 22
- 24: Sensor
- 25: Temperatursensor
- 26: zweiter Sensor
- 27: Mikrowellensensor
- 28: Abdeckung
- 29: Sensor
- 30: Luftfeuchtesensor
- 31: Sensor
- 32: Temperatursensor
- 33: Rechen- und Steuereinheit

## Patentansprüche

1. Vorrichtung zur thermogravimetrischen Materialfeuchtebestimmung mit einer Prüfkammer (2), die nach oben von einer Kammerdecke (8) begrenzt wird, einem von einem Magnetron (5) erzeugbaren über einen Wellenleiter (4) einer Prüfkammer (2) zuführbaren Mikrowellenfeld, einem in der Prüfkammer (2) angeordneten Tuningstab (22), einem Probenträger (3), der mit einem der Prüfkammer (2) vorgelagerten Wägemodul (6) in Wirkverbindung steht, und mindestens einem in der Prüfkammer (2) angeordneten Sensor (24),
**dadurch gekennzeichnet,**
**dass** der Tuningstab (22) an der Kammerdecke (8) mittig oberhalb des Probenträgers (3) angeordnet ist und dass an dem der Kammerdecke (8) abgewandten freien Ende (23) des Tuningstabs (22) mindestens ein Sensor (24) angeordnet ist.

2. Vorrichtung nach Anspruch 1,
**dadurch gekennzeichnet,**
**dass** der Sensor (24) als ein Mikrowellensensor (27), als Luftfeuchtesensor (30) oder als ein berührungslos messender Temperatursensor (25) ausgebildet ist.

3. Vorrichtung nach Anspruch 2,
**dadurch gekennzeichnet,**
**dass** in der Prüfkammer (2) ein zweiter Sensor (26) angeordnet ist.

4. Vorrichtung nach Anspruch 3,
**dadurch gekennzeichnet,**
**dass** der zweite Sensor (26) als ein berührungslos messender Temperatursensor (32) oder als ein Mikrowellensensor (27) ausgebildet ist.

5. Vorrichtung nach einem der Ansprüche 1 bis 4,
**dadurch gekennzeichnet,**
**dass** der Temperatursensor (25) als ein Infrarotsensor ausgebildet ist.

6. Vorrichtung nach einem der Ansprüche 1 bis 5,
**dadurch gekennzeichnet,**
**dass** der Wellenleiter (4) fixiert ist,
**dass** der Probenträger (3) um eine vertikale Drehachse (13) über die er mit dem Wägemodul (6) in Verbindung steht drehbar ist, und
**dass** in der Kammerdecke (8) Abluftöffnungen (17) vorgesehen sind, über die ein von mindestens einem Ventilator (19) erzeugter Abluftstrom aus der Prüfkammer (2) nach außen ableitbar ist.

7. Vorrichtung nach Anspruch 6,
**dadurch gekennzeichnet,**
**dass** im Abluftstrom ein Luftfeuchtesensor (30) vorgesehen ist.

8. Vorrichtung nach einem der Ansprüche 1 bis 7,
**dadurch gekennzeichnet,**
**dass** am Magnetron (5) ein Temperatursensor (32) vorgesehen ist.

## Claims

1. Device for thermogravimetric material moisture determination, with a testing chamber (2) upwardly bounded by a chamber cover (8), a microwave field able to be generated by a magnetron (5) and fed by way of a waveguide (4) to the testing chamber (2), a tuning rod (22) arranged in the testing chamber (2), a sample carrier (3) disposed in operative connection with a weighing module (6) pre-mounted in the testing chamber (2) and at least one sensor (24) arranged in the testing chamber (2), **characterised in that** the tuning rod (22) is arranged at the chamber cover (8) centrally above the sample carrier (3) and that at least one sensor (24) is arranged at the free end (23), which is remote from the chamber cover (8), of the tuning rod (22).

2. Device according to claim 1, **characterised in that** the sensor (24) is constructed as a microwave sensor (27), as an air moisture sensor (30) or as a contactlessly measuring temperature sensor (25).

3. Device according to claim 2, **characterised in that** a second sensor (26) is arranged in the testing chamber (2).

4. Device according to claim 3, **characterised in that** the second sensor (26) is constructed as a contactlessly measuring temperature sensor (32) or as a microwave sensor (27).

5. Device according to any one of claims 1 to 4, **characterised in that** the temperature sensor (25) is constructed as an infrared sensor.

6. Device according to any one of claims 1 to 5, **characterised in that** the waveguide (4) is fixed, that the sample carrier (3) is rotatable about a vertical rotational axle (13) by way of which it is connected with the weighing module (6) and that provided in the chamber cover (8) are exhaust air openings (17) by way of which an exhaust air flow generated by at least one fan (19) can be conducted outwardly from the testing chamber (2).

7. Device according to claim 6, **characterised in that** an air moisture sensor (30) is provided in the exhaust air flow.

8. Device according to any one of claims 1 to 7, **characterised in that** a temperature sensor (32) is provided at the magnetron (5).

## Revendications

1. Dispositif pour déterminer l'humidité d'un matériau par thermogravimétrie, présentant une chambre d'essai (2) délimitée vers le haut par un plafond de chambre (8), un champ à microondes pouvant être généré par un magnétron (5) et pouvant être amené par un guide d'ondes (4) à une chambre d'essai (2), une barre de syntonisation (22) disposée dans la chambre d'essai (2), un support d'échantillon (3) en liaison active avec un module de pesée (6) monté en amont de la chambre d'essai (2), et au moins un capteur (24) disposé dans la chambre d'essai (2),
**caractérisé en ce que** la barre de syntonisation (22) est disposée au milieu du plafond de chambre (8) au-dessus du support d'échantillon (3) et **en ce qu'**au moins un capteur (24) est disposé sur l'extrémité (23) libre, éloignée du plafond de chambre (8), de la barre de syntonisation (22).

2. Dispositif selon la revendication 1, **caractérisé en ce que** le capteur (24) est réalisé comme un capteur de microondes (27), comme un capteur d'humidité de l'air (30) ou comme un capteur de température (25) mesurant sans contact.

3. Dispositif selon la revendication 2, **caractérisé en ce qu'**un second capteur (26) est disposé dans la chambre d'essai (2).

4. Dispositif selon la revendication 3, **caractérisé en ce que** le second capteur (26) est réalisé comme un capteur de température (32) mesurant sans contact ou comme un capteur de microondes (27).

5. Dispositif selon l'une quelconque des revendications 1 à 4, **caractérisé en ce que** le capteur de température (25) est réalisé comme un capteur infrarouge.

6. Dispositif selon l'une quelconque des revendications 1 à 5, **caractérisé en ce que** le guide d'ondes (4) est fixé, **en ce que** le support d'échantillon (3) peut être tourné autour d'un axe de rotation vertical (13), par le biais duquel il est en liaison avec le module de pesée (6), et **en ce que** des ouvertures d'évacuation d'air (17) sont prévues dans le plafond de chambre (8), par lesquelles un courant d'air d'évacuation généré par au moins un ventilateur (19) peut être dérivé de la chambre d'essai (2) vers l'extérieur.

7. Dispositif selon la revendication 6, **caractérisé en ce qu'**un capteur d'humidité de l'air (30) est prévu dans le courant d'air d'évacuation.

8. Dispositif selon l'une quelconque des revendications 1 à 7, **caractérisé en ce qu'**un capteur de température (32) est prévu sur le magnétron (5).
